# EUROPEAN PATENT APPLICATION

(11) **EP 2 595 103 A1**
(43) Date of publication of application: **22.05.2013**
(21) Application number: 12193158.8
(22) Date of filing: 19.11.2012
(51) Int. Cl.: G06Q 10/10, H04L 12/58, G06F 3/0488

(54) **Apparatus and method of a mobile terminal using a dialog application having a notice function**

(30) Priority: 21.11.2011 KR 20110121371
(71) Applicant: Samsung Electronics Co., Ltd, Gyeonggi-do 443-742 (KR)
(72) Inventor: Lee, Ju-Young, Gyeonggi-do (KR)
(74) Representative: Hutter, Jacobus Johannes

(57) **Abstract**

The invention relates to a method for operating a mobile terminal using a dialog application displaying specified content on a specific region of a dialog window. The dialog window is scrolled as dialog content increases. The specified content is fixedly displayed even when the dialog content displayed on the dialog window is scrolled.

## Description

### TECHNICAL FIELD OF THE INVENTION

This invention relates generally to mobile terminal applications, and more particularly, to an apparatus and method of a mobile terminal using a dialog application having a notice function.

### BACKGROUND OF THE INVENTION

As functions for mobile terminals increases, applications allowing many users to have a dialog on line is currently under development. For example, applications such as KakaoTalk, Mypeople, etc. allows users to view dialog content with each other in real-time without inputting a counterpart's contact information. In addition, the above-described applications may be installed in a mobile terminal.

However, when a user inputs dialog content, the dialog content displayed previously on a dialog window is scrolled and often cannot be viewed on a current dialog window as new dialog content is displayed on the dialog window. That is, when a user who has participated in the dialog inputs dialog content containing important information, the important information may be scrolled out of view due to new dialog content, so that a user who has participates later in the dialog should scroll the dialog window up and down to view the important information.

Therefore, an alternative for allowing users who have participated in a dialog to always view a notice containing important information regardless of scrolling of dialog content may be useful.

### SUMMARY OF THE INVENTION

An object of the invention is to provide an apparatus and a method for allowing a user who has participated in a dialog to view a notice even when dialog content has scrolled by fixedly displaying the notice on a specific region of a dialog window.

A further object of the present invention is to provide an apparatus and a method for raising efficiency of an organization, a gathering, and/or a business by displaying a notice on a dialog window used by multiple users.

A still further object of the present invention is to provide an apparatus and a method for allowing a user who has participated later in a dialog to view a notice by allowing the notice to be undeleted even when all of the other users who have participated in the dialog stop the dialog after the notice is displayed.

According to a first aspect of the invention these objects are achieved by providing a method for operating a mobile terminal using a dialog application, the method comprising: displaying specified content on a specific region of a dialog window; and scrolling the dialog window as dialog content increases, wherein the specified content is fixedly displayed even when the dialog content displayed on the dialog window is scrolled.

According to a second aspect of the invention these object are achieved by providing an apparatus of a mobile terminal configured to use a dialog application, the apparatus comprising: a controller configured to display specified content on a specific region of a dialog window; and a display unit configured to configured to fixedly display the specified content even when dialog content displayed on the dialog window has scrolled. fixedly display the specified content even when dialog content displayed on the dialog window has scrolled.

According to a third aspect of the invention these objects are achieved by a method for operating a mobile terminal using a dialog application, the method comprising: displaying a first content on a first window without scrolling; displaying a second content on a second window with scrolling; and displaying a input window for inputting the first content and the second content, wherein the first content comprises a window for displaying a notice, and the second window comprises a widow for a message exchange.

Further advantageous embodiments of the invention are defined in the dependent claims.

Other aspects, advantages and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example embodiment of fixedly displaying a notice on a dialog window in a dialog application according to an embodiment of the present invention;

FIGURE 2 illustrates an example sequence for displaying a notice on a dialog window in a dialog application according to an embodiment of the present invention;

FIGURES 3A and 3B illustrate an example embodiment of writing specified content on an input window and then displaying this on a dialog window according to an embodiment of the present invention; and

FIGURE 4 illustrates an example mobile terminal that uses a dialog application having a notice function according to an embodiment of the present invention.

Throughout the drawings, like reference numerals will be understood to refer to like parts, components and structures.

### DETAILED DESCRIPTION OF THE INVENTION

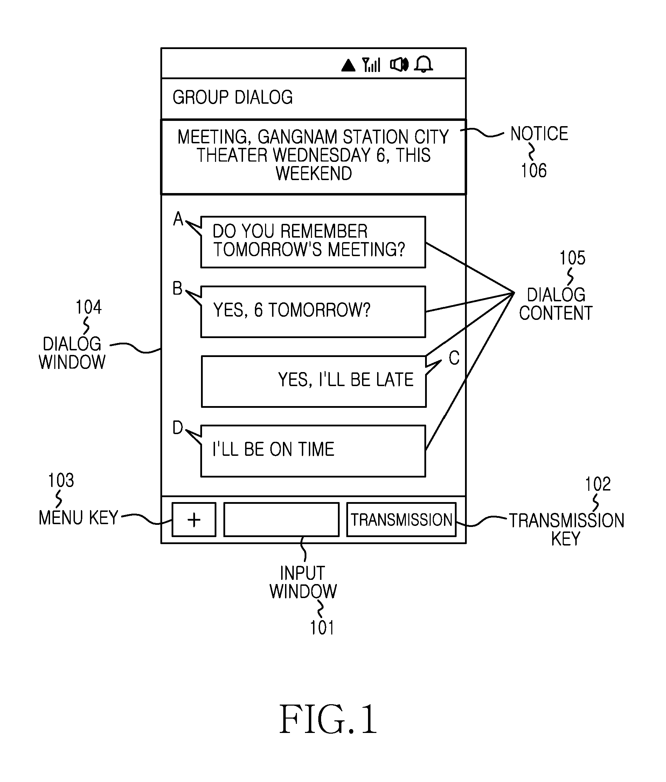

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal applications. The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness. In addition, same reference numerals are used for the similar functions and operations through the drawings.

FIGURE 1 illustrates an example embodiment of fixedly displaying a notice on a dialog window in a dialog application according to an embodiment of the present invention. As illustrated in FIGURE 1, an input window 101 is provided for allowing a user of a dialog application to write dialog content 105 or content which the user desires to express as a notice. More specifically, in the case where one or more users have a dialog with each other on-line, a relevant user should write content on the input window 101 in order to display dialog content 105 which the user desires to express on a dialog window 104. In addition, according to the present invention, even when a user desires to display a notice 106 on a specific region of the dialog window 104, the user writes the content on the dialog window 104. Whereas conventionally, a user has written content which the user desires to express on the input window 101 in order to display the dialog content 105, according to the present invention, a user may use the input window 101 to display the notice 106 as well.

A transmission key 102 serves as a key for displaying dialog content 105 on the dialog window 104, and for displaying the content on the dialog window 104 as the notice 106. More specifically, when a user selects the transmission key 102 in order to display content inputted to the input window 101 on the dialog window 104 as the dialog content 105, the content inputted to the input window 101 may be displayed as the dialog content 105 on the dialog window 104. In addition, when the user selects the transmission key 102 for more than a time set by the user in order to display the content inputted to the input window 101 as the notice 106 on the dialog window 104, the content input to the input window 101 may be displayed as the notice 106. This is an embodiment of displaying the content inputted to the input window 101 as the notice 106 using the transmission key 102. As described later, the content input to the input window 101 may be displayed as the notice 106 using a menu key 103.

The menu key 103 serves as a key for executing various additional functions to execute the dialog application according to the present invention. For example, a user may select the menu key to delete the dialog content 105 displayed on the dialog window 104, and may display the content inputted to the input window 101 as the notice 106. More specifically, though not shown in FIGURE 1, when a user selects the menu key 103 after inputting specific content into the input window 101, keys of various items may be displayed. When the user selects a key titled "transmit notice" among the various item keys, the specific content inputted to the input window 101 may be displayed as the notice 106 on a specific region of the dialog window 104. Therefore, the user may use the transmission key 102 and the menu key 103 in order to display specific content inputted to the input window 101 as the notice 106 on an arbitrary region of the dialog window 104.

The dialog window 104 displays the dialog content 105 inputted by at least one user and the notice 106 inputted by a specific user. More specifically, the dialog window 104 is where the dialog content 105 of the user who uses a dialog application is displayed according to a time sequence. In addition, it is the place where the notice 106 is displayed on an arbitrary region of the dialog window 104. The conventional dialog window 104 displays only the dialog content 105 of a user who has executed the dialog application and participated in the dialog, but according to the present invention, the notice 106 may be also displayed on a specific region of the dialog window 104.

The dialog content 105 denotes content written by a user who has participated in the dialog using the dialog application. More specifically, the user who has participated in the dialog may deliver his thought or feeling via the dialog content 105. Conventionally, the notice 106 has not been displayed on the dialog window 104, so that a user should deliver necessary information using only the dialog content 105. Therefore, in the case where the dialog content 105 displayed on the dialog window 104 is scrolled, a user who has participated later in the dialog or a user who has participated in the dialog initially but missed important content should browse and view the scrolled dialog content 105.

The notice 106 denotes content fixedly displayed on an arbitrary region of the dialog window 104 so that at least one user who has participated in the dialog may view important information. More specifically, in executing the dialog application, important information which all of users should recognize is fixedly displayed on the dialog window 104, so that a user who has participated later in the dialog may immediately view the important information. For example, as illustrated in FIGURE 1, a meeting place, a date, and time may be displayed on the uppermost portion of the dialog window 104 so that all users who participate in the dialog may view the meeting place, the date, and the time using the dialog application. Therefore, users who execute the dialog application later and participate in the dialog may view the notice displayed on the specific region of the dialog window 104 to recognize the meeting place, the date, and the time. In FIGURE 1, though the notice 106 is illustrated in the upper portion of the dialog window 104, the position of the notice 106 may be set to various portions such as the lower portion, the left side, the right side, of the dialog window 104, and the like and is settable by a user.

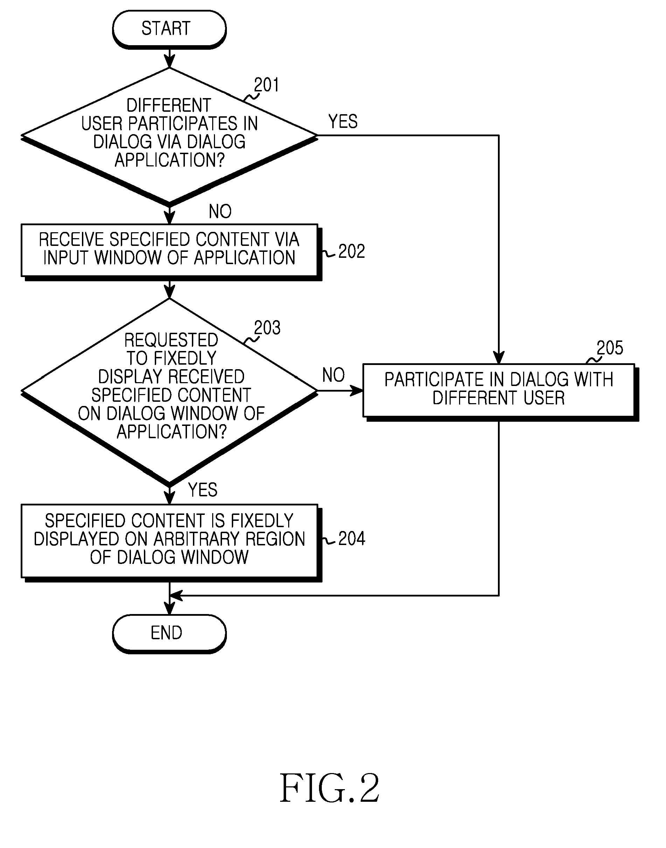

FIGURE 2 illustrates an example sequence for displaying a notice on a dialog window in a dialog application according to an embodiment of the present invention. As illustrated in FIGURE 2, a mobile terminal determines whether a different user participates in a dialog application in step 201. More specifically, when a user installs the dialog application in the mobile terminal and executes the dialog application according to the present invention, the mobile terminal determines whether a different user participates in the dialog. According to an embodiment of the present invention, only an initial user who has participated in the dialog application can write a notice on the dialog window. That is, a plurality of users who can write the notice on the dialog window cannot exist simultaneously, and only the initial user who has participated in the dialog may write the notice. Though not shown in FIGURE 2, preferably, in the case where a user who has been given the right to write the notice ends a dialog, the right may be transferred to a subsequent user who has participated in the dialog. For example, in the case where a first user has participated in a dialog application, if the first user has a notice to deliver to other users who use the dialog application, since the first user alone has the right to write the notice, the first user may write the necessary notice and notify the content. After that, assuming that a second user has participated in the dialog, the second user may view the content notified by the first user, and may have a dialog with the first user. In the case where the first user who has written the notice on the dialog window and had the dialog with the second user ends the dialog, the second user may be given the right. Therefore, if the second user has a notice to deliver to other users, the second user may additionally write the notice on the dialog window. Though not shown in FIGURE 2, according to an embodiment regarding the master, a specific user may be selected among multiple users who use the dialog application, so that only one selected user may be given the right to write and/or update the notice. That is, only the selected user may display a notice on the dialog window and may be allowed to modify and delete the written notice.

When determining that a different user does not participate in the dialog application, the mobile terminal receives specified content from the user via the input window of the application in step 202. More specifically, as described in more detail with reference to FIGURE 1, the mobile terminal may receive specified content from the user via the input window in order to display the notice on a specific region of the dialog window. The specified content, for example, may be an appointed place, a date, and time of a meeting to deliver to other users who use the dialog application, and may refer to a meeting. That is, the specified content denotes a notice.

When receiving the specified content from the user via the input window of the application, the mobile terminal determines whether it has been requested to fixedly display the specified content received from the user via the dialog window of the application in step 203. More specifically, the specified content received from the user via the dialog window of the application may be displayed as dialog content on the dialog window, and may be displayed as a notice on a specific region of the dialog window. In a case where the user desires to display a notice to deliver to other users on the dialog window, the user may input a specific key provided by the application or input a transmission key for at least a set time. That is, the user may write a notice on the input window and press the transmission key for more than the set time to input the notice on the dialog window, and may select a menu key to select a key titled "transmit notice", thereby inputting the notice on the dialog window.

In the case where the mobile terminal displays the specified content received from the user on the dialog window of the application, the requested specified content is fixedly displayed on an arbitrary region of the dialog window in step 204. More specifically, in the case where the user is requested to display a matter which the user desires to display as a notice on the dialog window, the notice is fixedly displayed on a specific region of the dialog window. Here, the specific region may be one of various regions in the region of the dialog window that is settable by the user. That is, the notice may be displayed on the uppermost portion of the dialog window, or may be displayed on various portions such as the lowermost portion, the left side, the right side, etc. of the dialog window. Therefore, the notice may be displayed on a specific region of the dialog window, so that even a user who has participated later in the dialog may immediately view the notice. For example, a meeting place, a date, and a time may be displayed on the uppermost portion of the dialog window so that all users who participate in the dialog may view the notice. Therefore, users who have executed the dialog application later and participate in the dialog may view the notice displayed on the upper portion of the dialog window to recognize the meeting place, the date, and the time.

If a different user participates in a dialog via a dialog application or a user is not requested to fixedly display received specified content on the dialog window of the application, the user may transmit the content inputted to the input window to the dialog window as dialog content to participate in a dialog with other users in step 205. More specifically, a user not having a right to write the notice can display a notice on the dialog window or a user who has the right but does not desire to display the notice on the dialog window may transmit the content inputted to the input window to the dialog window as dialog content to participate in a dialog with other users.

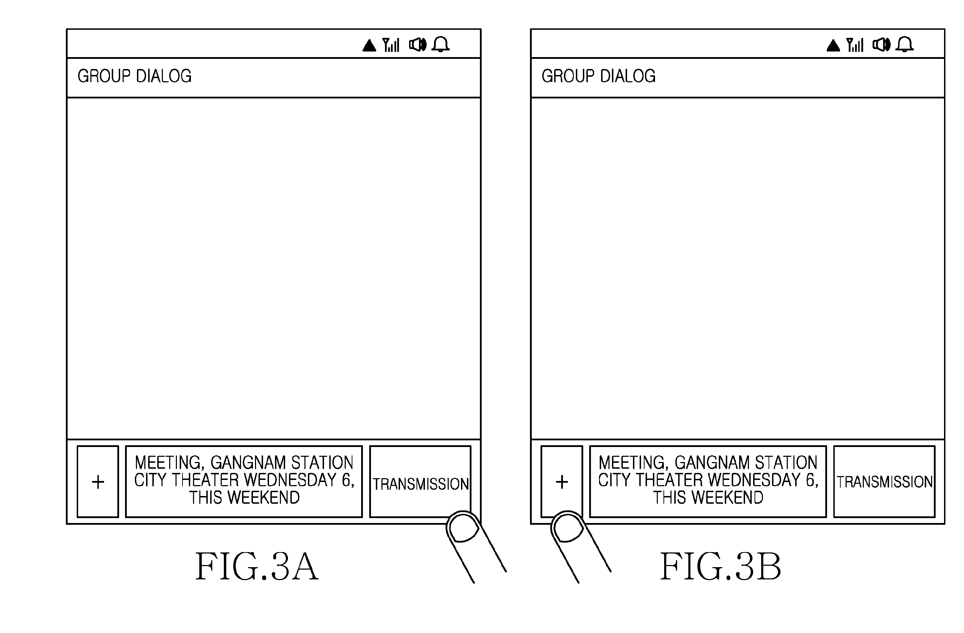

FIGURES 3A and 3B illustrate an example embodiment of writing specified content on an input window and then display the content on a dialog window according to an embodiment of the present invention. First, FIGURE 3A illustrates a case of selecting a transmission key to display a notice on a dialog window. As illustrated in FIGURE 3A, the transmission key serves as a key for displaying content inputted to an input window by a user on a dialog window as dialog content and also displaying the content on the dialog window as a notice. More specifically, when the user selects the transmission key in order to display the content inputted to the input window on the dialog window as the dialog content, the content inputted to the input window is displayed as dialog content on the dialog window. In addition, when the user selects the transmission key for more than a time set by the user in order to display the content inputted to the input window on the dialog window as a notice, the content inputted to the input window may be displayed as the notice. Therefore, the user may use the transmission key in order to display the content inputted to the input window on an arbitrary region of the dialog window as a notice.

FIGURE 3B illustrates an example embodiment of selecting a menu key to request to display a notice on a dialog window. As illustrated in FIGURE 3B, a menu key serves as a key for executing various additional functions to execute the dialog application according to the present invention. For example, a user may select the menu key to delete dialog content displayed on the dialog window, and display content inputted to the input window as a notice. More specifically, when the user inputs specific content to the input window and then selects the menu key, keys of various items are displayed. When the user selects a key titled "transmit notice" among various item keys, the specific content inputted to the input window may be displayed as a notice on a specific region of the dialog window. Therefore, the user may use the menu key in order to display the specific content inputted to the input window on the specific region of the dialog window as a notice.

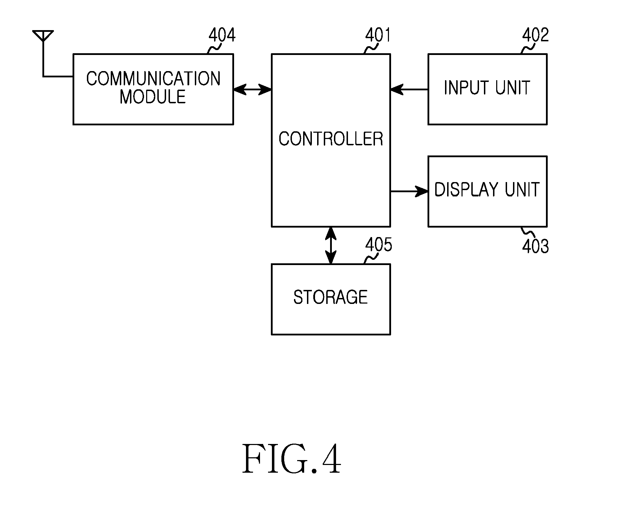

FIGURE 4 illustrates an example mobile terminal that uses a dialog application having a notice function according to an embodiment of the present invention. As illustrated in FIGURE 4, the mobile terminal may include a controller 401, an input unit 402, a display unit 403, a communication unit 404, and a storage 405.

The controller 401 controls an overall operation of the mobile terminal. For example, the controller 401 controls the display of specified content on a specific region of the dialog window, and displays inputted specified content on the dialog window.

The input unit 402 provides input data generated by a user's selection to the controller 401. For example, the input unit 402 receives specified content from the user via the input window of the application, receives a specific key provided by the application, or receives the transmission key for more than a set time.

The display unit 403 displays status information of the mobile terminal, a menu screen, and storage information under control of the controller 401. For example, the display unit 403 fixedly displays specified content when dialog content displayed on the dialog window is scrolled. Alternatively, when at least a portion of dialog content displayed on the dialog window is scrolled and cannot be displayed on the dialog window, the display unit 403 displays the specified content so that the specified content is fixed on a specific region of the dialog window.

A touch sensitive display, called as a touch screen, may be used as the display unit 403. In this situation, a touch input may be performed via the touch sensitive display.

The communication module 404 processes a signal transmitted/received via an antenna, such as for voice and data communication.

The storage 405 may include a program storage for storing executable instructions of a program for controlling an operation of the mobile terminal and a data storage for storing data generated during execution of the program.

In the above block configuration, the controller 401 may perform an overall operation of the mobile terminal. Separate configuration and illustration of the controller 401 in an embodiment of the present invention is for separately describing each function. Therefore, in actual realization of a product, all or some of the functions of the mobile terminal may be processed by the controller 401.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although the invention has been shown and described with reference to certain exemplary embodiments thereof, it will be understood by those skilled in the art that various changes in form and details may be made therein without departing from the scope of the invention as defined by the appended claims and their equivalents. Therefore, the scope of the present invention should not be limited to the above-described embodiments but should be determined by not only the appended claims but also the equivalents thereof.

## Claims

1. A method for operating a mobile terminal using a dialog application, the method comprising:
displaying specified content on a specific region of a dialog window; and
scrolling the dialog window as dialog content increases,
wherein the specified content is fixedly displayed even when the dialog content displayed on the dialog window is scrolled.

2. The method of claim 1, further comprising:
receiving another specified content from a user via an input window of the application;
displaying the received other specified content on the dialog window; and
displaying the other specified content such that the other specified content is fixed on a specific region of the dialog window.

3. The method of claim 2, wherein the user has participated initially in a dialog among other users who have participated in the dialog.

4. The method of claim 2, wherein displaying the received specified content on the dialog window comprises receiving a specific key provided by the application, or receiving a transmission key for at least a set time.

5. The method of claim 1, wherein the specified content is fixedly displayed even when the dialog content displayed on the dialog window is scrolled such that the specified content is discriminated from the dialog content, the specified content being fixed on the specific region of the dialog window even when at least a portion of the dialog content displayed on the dialog window has scrolled and is not displayable on the dialog window.

6. The method of one of claim 1, wherein the specified content comprises a notice of at least one user who has participated in the dialog.

7. An apparatus of a mobile terminal configured to use a dialog application, the apparatus comprising:
a controller configured to display specified content on a specific region of a dialog window; and
a display unit configured to fixedly display the specified content even when dialog content displayed on the dialog window has scrolled.

8. The apparatus of claim 7, further comprising an input unit configured to receive specified content from a user via an input window of the application,
wherein the controller is configured to display the received specified content on the dialog window.

9. The apparatus of claim 8, wherein the user has participated initially in a dialog among other users who have participated in the dialog.

10. The apparatus of claim 8, wherein the input unit is configured to receive a specific key provided by the application, or receive a transmission key for at least a set time.

11. The apparatus of claim 7, wherein the display unit is configured to fixedly display the specified content on the specific region of the dialog window even when at least a portion of the dialog content displayed on the dialog window has scrolled and is not displayable on the dialog window.

12. The apparatus of claim 7, wherein the specified content comprises a notice of at least one user who has participated in the dialog.

13. The apparatus of claim 7, wherein only an initial user of the dialog application is allowed to write the specified content.

14. A method for operating a mobile terminal using a dialog application, the method comprising:
displaying a first content on a first window without scrolling;
displaying a second content on a second window with scrolling; and
displaying a input window for inputting the first content and the second content,
wherein the first content comprises a window for displaying a notice, and the second window comprises a window for a message exchange.
